# EUROPÄISCHE PATENTSCHRIFT

(11) **EP 0 470 412 B1**
(45) Veröffentlichungstag und Bekanntmachung des Hinweises auf die Patenterteilung: **16.03.1994**
(21) Anmeldenummer: 91112093.9
(22) Anmeldetag: 19.07.1991
(51) Int. Cl.: G01M 11/06

(54) **Prüfgerät für Fahrzeugscheinwerfer**
Testing device for vehicle headlights
Appareil d'essai des phares d'automobiles

(30) Priorität: 10.08.1990 DE 4025392
(43) Veröffentlichungstag der Anmeldung: 12.02.1992
(73) Patentinhaber: Hella KG Hueck & Co., 59552 Lippstadt (DE)
(72) Erfinder: Pähler, Hermann, W-4790 Paderborn (DE)

(56) Entgegenhaltungen:
- DE-C- 516 663
- DE-U- 8 223 713

## Beschreibung

Die Erfindung bezieht sich auf ein Prüfgerät für Fahrzeugscheinwerfer mit folgenden Merkmalen:
- der Optikkasten ist an einem ortsbeweglichen Gestell angebracht,
- in eine öffnung des Optikkastens ist eine Sammellinse eingesetzt,
- im Inneren des Optikkastens liegt der Sammellinse ein senkrecht zur optischen Achse der Sammellinse verlaufender Prüfschirm gegenüber,
- der Prüfschirm ist in der Vertikalen verstellbar geführt und durch ein von außen betätigbares Stellrad und einer mit dem Stellrad gekoppelten Vorrichtung, welche die Rotationsbewegung des Stellrades in die translatorische Bewegung des Prüfschirmes umwandelt, in der Höhe verstellbar.

Ein solches, aus dem DE-GM 82 23 713 bekanntes Prüfgerät ist, nachdem es vor den zu prüfenden Fahrzeugscheinwerfer gestellt ist, so einzustellen, daß die optische Achse des Optikkastens parallel zur Fahrzeuglängsachse verläuft und durch die Mitte des Scheinwerfers geht. Danach ist zu überprüfen, ob der Prüfschirm bzw. die auf ihm angebrachte Meßlinie in der richtigen Höhe verläuft, d. h. in einer Höhe verläuft, welche dem zu überprüfenden Scheinwerfer entspricht, da je nach seinem Verwendungszweck das aus ihm austretende Licht unter verschiedenen Neigungswinkeln zur Fahrbahnebene verläuft. Deshalb ist eine Vorrichtung zur Höhenverstellung des Prüfschirmes notwendig. Die vertikale Führung des Prüfschirmes besteht aus einem an der Rückseite des Prüfschirmes befestigten, ersten quaderförmigen Führungselement, welches schubladenartig in einem an dem Optikkasten befestigten, kastenförmigen zweiten Führungselement eingesetzt ist. Beide Führungselemente müssen sehr eng toleriert sein, damit der Prüfschirm möglichst klapperfrei gehalten ist. Die Vorrichtung, welche die Rotationsbewegung des Stellrades in eine translatorische Bewegung umwandelt, besteht aus einer vertikal verlaufenden Zahnstange, welche an dem starr mit dem Prüfschirm verbundenen Führungselement angebracht ist, und einem mit der Zahnstange zusammenwirkenden Zahnrad. Das Zahnrad und das Stellrad weisen eine gemeinsame Drehachse auf. Eine solche Vorrichtung ist nicht nur kostenintensiv in ihrer Herstellung, sondern es ist auch nicht sicher, daß der Prüfschirm nach dem Drehen des Stellrades in bestimmte Positionen immer wieder genau die dem Stellrad entsprechende Stellung einnimmt, da bei einfachen Getrieben zwischen dem Zahnrad und der Zahnstange Spiel besteht. Außerdem sind, wenn die Toleranzen zwischen dem Zahnrad und der Zahnstange und den beiden Führungselementen sehr eng gewählt sind, zwar die vorstehend genannten Nachteile weitestgehend behoben, jedoch könnte dann das Verstellen des Stellrades zu schwergängig sein.

Aufgabe der Erfindung ist es, das im Gattungsbegriff beschriebene Prüfgerät für Fahrzeuge derart zu gestalten, daß die Führungs- und Verstellvorrichtung sehr einfach im Aufbau und kostengünstig in der Herstellung ist und zur Umwandlung von einer Rotationsbewegung in eine translatorische Bewegung sowohl ein aus Zahnrad und Zahnstange bestehendes Getriebe als auch das Spiel, welches normalerweise bei den einfachen aus Zahnrad und Zahnstange bestehenden Getrieben vorhanden ist, entfällt.

Diese Aufgabe wird nach der Erfindung dadurch gelöst, daß
- der Prüfschirm an einer im Optikkasten fest eingebauten, vertikal verlaufenden Führungsstange gegen Verdrehen gesichert und in der Höhe verstellbar ist,
- die Drehachse des Stellrades und die Längsachse der Führungsstange parallel zueinander verlaufen,
- mit der dem Prüfschirm zugewandten Seitenfläche des Stellrades ein Ansatz starr verbunden ist, dessen von der Seitenfläche des Stellrades wegweisende Fläche als schiefe Ebene zu der Seitenfläche des Stellrades ausgebildet ist,
- die schiefe Ebene sich um die Drehachse herum erstreckt,
- der Prüfschirm auf der schiefen Ebene aufliegt,
- ein zwischen dem Optikkasten und dem Prüfschirm eingesetztes federndes Element den Prüfschirm gegen die schiefe Ebene drückt.

Bei einer solchen Lösung besteht zwischen dem Stellrad und dem Prüfschirm kein Spiel, weil das federnde Element den Prüfschirm gegen die schiefe Ebene drückt. Aus diesem Grund nimmt der Prüfschirm nach dem Drehen des Stellrades in bestimmte Positionen immer wieder genau die dem Stellrad entsprechende Stellung ein und ist in jeder Stellung klapperfrei gehalten.

Weiterhin ist es vorteilhaft, wenn der Querschnitt der Führungsstange, zumindest in dem als Führung für den Prüfschirm dienenden Abschnitt, ein Vieleck, insbesondere ein Quadrat ist und dieser Abschnitt der Führungsstange durch mindestens eine entsprechend geformte öffnung eines starr mit dem Prüfschirm verbundenen Führungselementes hindurchgeht. In diesem Zusammenhang ist es weiterhin vorteilhaft, wenn die Führungselemente an der Rückseite des Prüfschirmes befestigt sind, und der Prüfschirm bzw. das an ihm befestigte Führungselement mit einem zur schiefen Ebene hin gerichteten Vorsprung auf einem kleinen Flächenabschnitt der schiefen Ebene aufliegt. Die Führungsvorrichtung für den Prüfschirm ist besonders kostengünstig herstellbar, weil zum einen die Stange, welche einen quadratischen Querschnitt aufweist, als Rohling im Handel erhältlich ist und zum anderen die öffnungen in den Führungselementen, durch welche die Führungsstange hindurchgeht, grob toleriert sein können. Obwohl bei einer groben Tolerierung zwischen der Führungsstange und den Führungselementen Spiel besteht, ist der Prüfschirm klapperfrei gehalten, da auf den Prüfschirm durch die schiefe Ebene ein Drehmoment wirkt, durch welches bei zwei Führungselementen das eine Führungselement mit seiner öffnung gegen eine Seitenfläche und das andere Führungselement mit seiner öffnung gegen die dieser Seitenfläche gegenüberliegende Seitenfläche der Führungsstange gedrückt wird.

Ein weiterer Vorteil ist es, wenn der Ansatz, angrenzend an die höchste Stelle der schiefen Ebene, eine als Anschlag für den Prüfschirm dienende Erhebung aufweist und von der Erhebung ausgehend eine zum Stellrad sich hin erstreckende Seitenfläche aufweist, welche etwa parallel zur Drehachse verläuft. Dadurch ist der Stellweg des Stellrades möglichst groß, und die Verstellvorrichtung kann nicht über den gewünschten Stellweg hinaus verdreht und somit nicht beschädigt werden.

Vorteilhaft ist es weiterhin, wenn die schiefe Ebene sich um die Drehachse nicht über einen Vollwinkel erstreckt und in die Seitenfläche des Stellrades übergeht. Dadurch ist es möglich, daß der Prüfschirm in der untersten Stellung mit seinem Vorsprung nicht mehr an der schiefen Ebene, sondern an der Seitenfläche des Stellrades anliegt und somit der die schiefe Ebene aufweisende Ansatz in Richtung der Drehachse kleiner baut. In diesem Zusammenhang ist es vorteilhaft, wenn der zwischen der schiefen Ebene und der Seitenfläche des Stellrades bestehende Winkel kleiner als 45° ist. Je kleiner der Winkel bei einer bestimmten maximalen Verstellhöhe des Prüfschirmes ist, um so größer muß der Abstand der schiefen Ebene zur Drehachse sein und um so eher ist die Verstellvorrichtung selbsthemmend. Das Stellrad ist in der eingestellten Position besonders gut arretiert, wenn in bestimmten Stellungen des Stellrades zwischen dem Stellrad und dem Optikkasten eine Rast- oder Bremsvorrichtung wirkt.

Ebenfalls ist es vorteilhaft, wenn der die schiefe Ebene aufweisende Ansatz von einem Wandungsabschnitt eines hohl ausgeführten und koaxial zur Drehachse verlaufenden Zylinders gebildet ist und die öffnung des Stellrades von einer Hülse gebildet ist, mit welcher das Stellrad auf einen Lagerzapfen aufgesteckt ist, welcher auf dem nach unten weisenden Abschnitt der Führungsstange angeformt ist und etwa so lang wie die Hülse ausgeführt ist. Bei einer solchen Lösung fluchtet die Drehachse des Stellrades mit der Längsachse der Führungsstange, und ein Verkanten des Stellrades gegenüber dem Lagerzapfen ist bei einer länger ausgeführten Hülse nicht möglich. In diesem Zusammenhang ist es weiterhin vorteilhaft, wenn auf den Lagerzapfen oder die Hülse des Stellrades eine Druckfeder aufgesetzt ist, welche sich mit einem Ende an einer Schulter der Führungsstange abstützt und mit dem anderen Ende unter Vorspannung an der Seitenfläche des Stellrades anliegt und die dieser Seitenfläche gegenüberliegende und als Reibfläche dienende Seitenfläche des Stellrades gegen eine Reibfläche des Optikkastens drückt. Dabei ist es zweckmäßig, wenn der die schiefe Ebene aufweisende, zylinderförmige Abschnitt sich bis auf die untere Seite des Stellrades hin erstreckt und einen Boden aufweist, dessen Außenseite die Reibfläche des Stellrades ist, und wenn die Druckfeder sich an einer ringförmigen Scheibe abstützt, welche auf den Lagerzapfen aufgesetzt ist und an der den Lagerzapfen angrenzenden Schulter anliegt. Eine solche Lösung ist sehr einfach und sehr kostengünstig herstellbar. Außerdem ist eine solche Bremsvorrichtung sehr sicher.

Weiterhin ist es vorteilhaft, wenn der nach oben weisende Endabschnitt der Führungssäule von einer Druckfeder umgeben ist, welche mit ihrem einen Ende gegen ein Führungselement und mit dem anderen Ende gegen eine Wandung des Optikkastens drückt, welche eine öffnung aufweist, durch welche der nach oben weisende Endabschnitt der Führungssäule hindurchgeht und welche dem Querschnitt des Endabschnitts entsprechende Abmessungen aufweist. Hierbei ist es weiterhin zweckmäßig, wenn der Lagerzapfen an seiner Stirnfläche ein Befestigungselement aufweist, mit welchem er an einer Wandung des Optikkastens befestigt ist. Eine solche Führungsstange ist sehr einfach und leicht zu montieren und sehr sicher sowohl in axialer Richtung als auch gegen Verdrehen gesichert. In diesem Zusammenhang ist es weiterhin vorteilhaft, wenn die Wandungen von freien Schenkeln eines U-förmig ausgeführten Halterungsteils gebildet sind. Hierbei dient der untere Schenkel des U-förmigen Halterungsteils nicht nur zur Arretierung der Führungsstange, sondern auch mit seiner Innenseite als Reibfläche für das Stellrad. Hierbei ist es weiterhin vorteilhaft, wenn das Stellrad und die Führungsstange an dem U-förmigen Halterungsteil befestigt werden, bevor dieses in den Optikkasten eingesetzt wird. Hierbei ist es vorteilhaft, wenn der die Schenkel verbindende mittlere Steg des Halterungsteils an einer Innenseite des Optikkastens befestigt ist. Dies kann z. B. durch Schrauben erfolgen.

Bei einer vorteilhaften Weiterbildung der Erfindung ragt das Stellrad mit einem Abschnitt durch eine öffnung im Optikkasten nach außen und verläuft hinter einer an dem Optikkasten befestigten, durchsichtigen Platte, an welche eine Markierung für eine Skala des Stellrades angebracht ist. Bei einer solchen Lösung ist das Stellrad geschützt hinter der durchsichtigen Platte angeordnet, und seine Stellung und somit die des Prüfschirmes ist von oben her gut zu sehen.

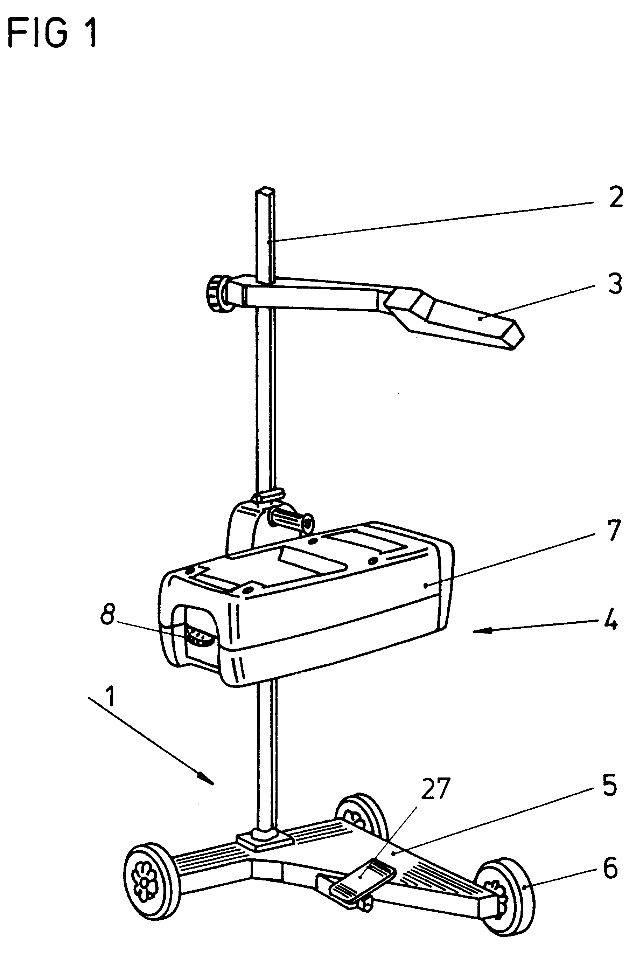

Ein Ausführungsbeispiel der Erfindung ist in der Zeichnung dargestellt, und zwar zeigt
Figur 1 in einer perspektivischen Darstellung ein Prüfgerät für Fahrzeugscheinwerfer, während

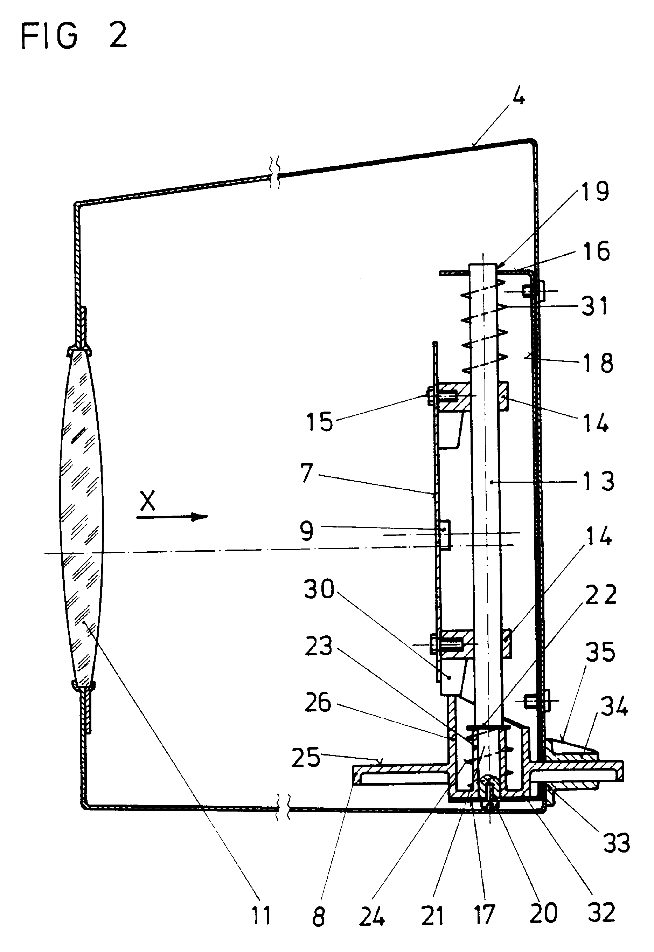

Figur 2 einen Längsschnitt durch einen Teil des Optikkastens, in welchem ein Prüfschirm eingebaut ist, und

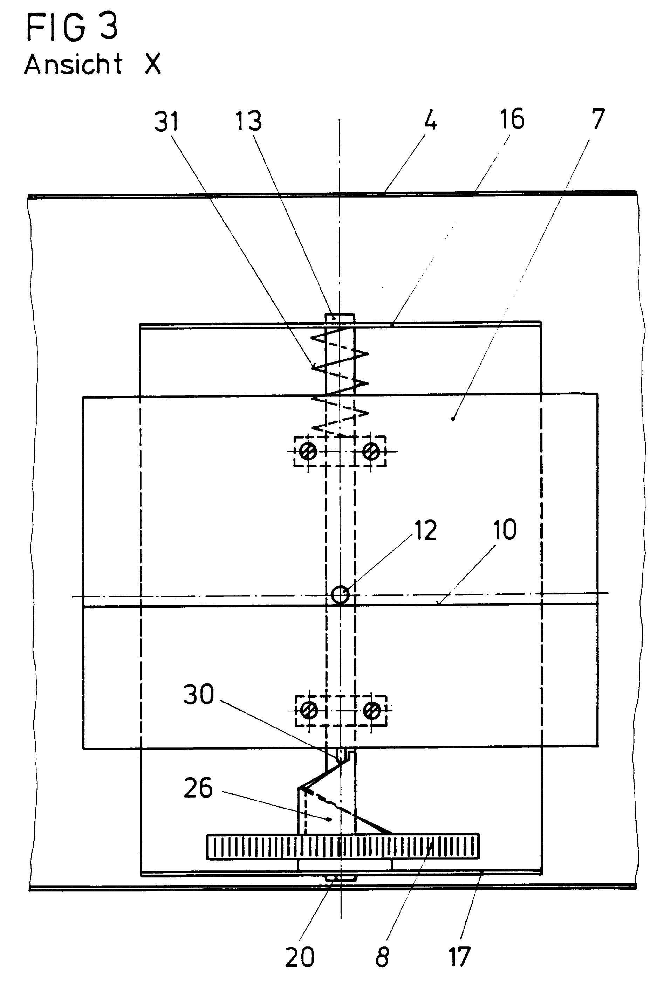

Figur 3 eine Ansicht aus Richtung X auf den Prüfschirm und seine Verstellvorrichtung und
Figur 4 eine Abwicklung einer um eine Drehachse der Verstellvorrichtung sich herum erstreckenden schiefen Ebene, welche mit einem Stellrad starr verbunden ist.

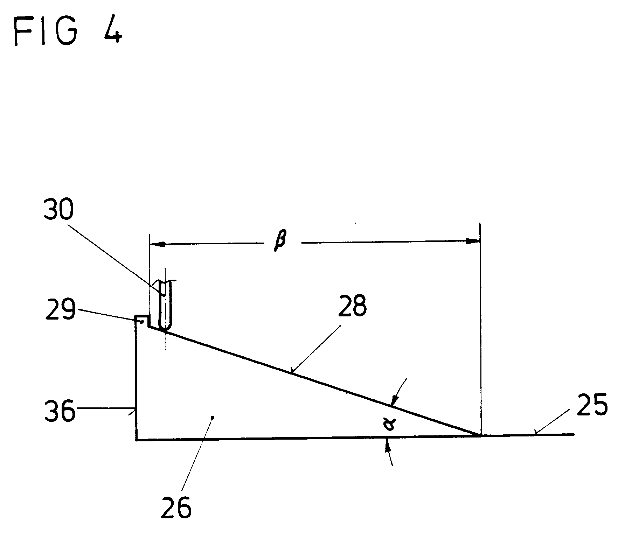

Das Prüfgerät besteht im wesentlichen aus einem Fahrgestell (1), das an einer senkrecht zur Standfläche des Prüfgerätes stehenden, im Querschnitt quadratischen Säule (2) eine Visiereinrichtung (3) und einen Optikkasten (4) höhenverstellbar trägt. Der Fußteil (5) des Fahrgestells (1) weist drei Räder (6) auf. In einer vertikalen Bohrung des Fußteils (5) ist die Säule (2) mit ihrem im unteren Bereich zylinderförmig ausgebildeten Ende drehbar gelagert. Durch das Betätigen des Hebels (27) ist die Säule am Fußteil in jeder Stellung festklemmbar. Die Einstellung des Optikkastens auf die Scheinwerferhöhe erfolgt durch eine Höhenverstellung auf der vertikal verlaufenden Säule (2), während das Ausrichten der optischen Achse des Optikkastens (4) parallel zur Fahrzeuglängsachse mit Hilfe des Visiers (3) erfolgt. Hierbei peilt die Bedienungsperson mit dem Visier zwei auf gleicher Höhe und symmetrisch zur Fahrzeuglängsachse liegende Punkte der Fahrzeugkarosserie an. Nach dem Ausrichten des Optikkastens ist die drehbare Säule (2) durch das Betätigen einer Feststellbremse im Fußteil (5) festsetzbar. Danach sind über das Stellrad (8) der in den Optikkasten (4) eingebaute Prüfschirm (7) bzw. sein Fotoelement (9) und seine Meßlinie (10) in eine dem zu prüfenden Scheinwerfer entsprechende Höhe zu verstellen. Dies ist notwendig, weil es Scheinwerfertypen gibt, deren Lichtstrahlen unterschiedlich geneigt zur Fahrbahnebene verlaufen. Der Prüfschirm (7) besteht aus einer rechteckigen Platte, welche der in einer Seitenwandung des Optikkastens (4) eingebauten Sammellinse (11) gegenüberliegt und senkrecht zur optischen Achse der Sammellinse verläuft. Das Fotoelement (9) ist hinter der öffnung (12) des Prüfschirmes angeordnet. Auf der Rückseite des Prüfschirmes ist die vertikal verlaufende Führungsstange (13) des Prüfschirmes (7) angeordnet. Die Längsachse der Führungsstange liegt in der vertikalen Symmetrieebene des Prüfschirmes (7). Die Führungsstange (13) weist einen quadratischen Querschnitt auf und geht durch entsprechende öffnungen der beiden Führungselemente (14) hindurch. Die Führungselemente (14) sind zueinander beabstandet und durch die Schrauben (15) an dem Prüfschirm befestigt. Die Führungsstange (13) ist zwischen die freien Schenkel (16 und 17) des aus Blech hergestellten, U-förmigen Halterungsteils (18) eingesetzt. Der obere Schenkel (16) des Halterungsteils weist eine dem Querschnitt der Führungsstange (13) entsprechende quadratische öffnung (19) auf, in welche der nach oben weisende Endabschnitt der Führungsstange (13) eingreift. Der Führungsstab ist etwa so lang, wie der die Schenkel (16 und 17) verbindende Steg des Halterungsteils ausgeführt ist und liegt mit der nach unten gerichteten Fläche an der Innenseite des unteren Schenkels (17) an. In diese Fläche des Führungsstabes (13) ist eine als Befestigungsvorrichtung für den Führungsstab dienende Gewindebohrung eingebracht, in welche die Schraube (20) eingreift, die mit ihrem Kopf an der Außenseite des freien Schenkels (17) anliegt und den Führungsstab gegen die Innenseite des Schenkels (17) drückt. Durch die Befestigungsschraube ist der Führungsstab (13) axial und durch die in den Schenkel (16) eingebrachte öffnung (19) gegen Verdrehen arretiert. Die Führungsstange (13) ist in dem nach unten weisenden Endabschnitt (21) als Lagerzapfen ausgeführt. Auf den Lagerzapfen (21) ist vor der Montage der Führungsstange (13) die ringförmige Scheibe bis zu der durch den Lagerzapfen gebildeten Schulter der Führungsstange (13) aufgeschoben. Außerdem ist auf den Lagerzapfen (21) das Stellrad (8) mit seiner zentralen Hülse (23), welche etwa so lang wie der Lagerzapfen (21) ausgeführt ist, aufgeschoben. Nach dem Einbau der Führungsstange in das Halterungsteil (18) ist die auf die Hülse (23) aufgesetzte Druckfeder (24) zusammengedrückt, da sie mit ihrem einen Ende an der ringförmigen Scheibe (22) anliegt und mit dem anderen Ende an der nach oben gerichteten Seitenfläche des Stellrades (8) anliegt. Durch die Kraft der Druckfeder liegt das Stellrad unter Vorspannung an der Innenseite des freien Schenkels (17) des Halterungsteils (18) an. An das Stellrad (8) ist an die nach oben gerichtete Seitenfläche (25) der Ansatz (26) angeformt, welcher von einem hohl ausgeführten und koaxial zur Drehachse verlaufenden Zylinder gebildet ist. In Figur 4 ist die Abwicklung des Wandungsabschnitts des Zylinders (26) dargestellt, und es ist in dieser Ansicht zu erkennen, daß die Stirnfläche (28) des Wandungsabschnitts (26) eine schiefe Ebene zur Seitenfläche (25) des Stellrades (8) ist. Hierbei verläuft die schiefe Ebene mit dem Winkel (α), welcher 19° groß ist, zur Seitenfläche (25). Die schiefe Ebene (28) verläuft nicht vollständig um die Drehachse herum, sondern in dem Winkel (β), welcher etwa 300° groß ist. Auf der schiefen Ebene liegt das untere Führungselement (14), welches starr mit dem Prüfschirm (7) verbunden ist, mit dem nach unten gerichteten Vorsprung (30) auf. Die auf den nach oben weisenden Endabschnitt der Führungsstange (13) aufgesetzte Druckfeder (31) liegt mit ihrem einen Ende an der Innenseite des oberen Schenkels (16) des Halterungsteils (18) und mit der anderen Seite an dem oberen Führungselement (14) an und drückt somit den Prüfschirm (7) bzw. den Vorsprung (30) des starr mit dem Prüfschirm (7) verbundenen Führungselementes (14) gegen die schiefe Ebene (28). Durch diese auf die schiefe Ebene (28) wirkende Kraft verdreht sich das Stellrad nicht selbsttätig, da die auf die Hülse (23) des Stellrades aufgesetzte Druckfeder (24) das Stellrad gegen die Innenseite des Schenkels drückt und somit die beiden aneinanderliegenden Flächen des Stellrades und des Schenkels (17) Reibeflächen sind und als Bremsvorrichtung dienen. Hierbei hängt es von der Oberflächenbeschaffenheit der Reibflächen und der Dimensionierung der Druckfeder ab, wie groß die Bremskraft ist. Die Bremskraft kann um so kleiner sein, je kleiner der Winkel (α) zwischen der schiefen Ebene (28) und der Seitenfläche (25) des Stellrades ist und je kleiner die Kraft ist, mit welcher der Vorsprung (30) des Führungselementes (14) an der schiefen Ebene anliegt. Die Bremskraft der Bremsvorrichtung sollte nicht größer als nötig sein, damit das Stellrad (8) leichtgängig und ruckfrei verstellbar ist. Dies ist um so eher gegeben, je größer der Außendurchmesser des Stellrades (8) gegenüber den Abmessungen der Reibflächen ist. Die Reibfläche des Stellrades (8) ist die Außenseite des Bodens (32), welcher von der nach unten sich erstreckenden Verlängerung des zylinderförmigen Wandungsabschnittes (26) gebildet ist. Das Stellrad (8) ragt durch die öffnung (33) in dem Optikkasten (4) nach außen und ist in dem an den Optikkasten angrenzenden Abschnitt von der durchsichtigen Platte (34) abgedeckt, welche mit der Markierung (35) versehen ist. Die Platte (34) ist der Abschnitt eines Kunststoffteils, welches sich um den aus dem Optikkasten (4) herausragenden Abschnitt des Stellrades (8) herum erstreckt und an dem Optikkasten (4) befestigt ist. In die Seitenfläche (25) des Stellrades (8) ist für die Markierung (35) eine Skala eingebracht (nicht dargestellt). Beim Drehen des Stellrades (8) gleitet der Vorsprung (30) des Führungselementes (14) an der schiefen Ebene entlang. Wegen der Bremsvorrichtung ist nach dem Loslassen des Stellrades (8) die Verstellvorrichtung selbsthemmend. An der höchsten Stelle der schiefen Ebene (28) ist an den Wandungsabschnitt (26) der nach oben weisende Ansatz (29) angeformt, welcher als Anschlag für den Vorsprung (30) dient. Da die schiefe Ebene sich um einen Winkel (β) = 300° um die Achse herum erstreckt, geht sie in die Seitenfläche (25) des Stellrades über, deren zwischen der Ebene und der vertikalen schmalen Seitenfläche (36) verlaufende Abschnitt ebenfalls als Gleitfläche für den Vorsprung (30) dient.

## Patentansprüche

1. Prüfgerät für Fahrzeugscheinwerfer mit folgenden Merkmalen:
- der Optikkasten (4) ist an einem ortsbeweglichen Gestell (1) angebracht,
- in eine öffnung des Optikkastens (4) ist eine Sammellinse (11) eingesetzt,
- im Inneren des Optikkastens (4) liegt der Sammellinse (11) ein senkrecht zur optischen Achse der Sammellinse verlaufender Prüfschirm (7) gegenüber,
- der Prüfschirm (7) ist in der Vertikalen verstellbar geführt und durch ein von außen betätigbares Stellrad (8) und einer mit dem Stellrad (8) gekoppelten Vorrichtung, welche die Rotationsbewegung des Stellrades (8) in die translatorische Bewegung des Prüfschirmes (7) umwandelt, in der Höhe verstellbar,
dadurch gekennzeichnet, daß
- der Prüfschirm (7) an einer im Optikkasten (4) fest eingebauten, vertikal verlaufenden Führungsstange (13) gegen Verdrehen gesichert und in der Höhe verstellbar ist,
- die Drehachse des Stellrades (8) und die Längsachse der Führungsstange (13) parallel zueinander verlaufen,
- mit der dem Prüfschirm (7) zugewandten Seitenfläche (25) des Stellrades (8) ein Ansatz (26) starr verbunden ist, dessen von der Seitenfläche (25) des Stellrades (8) wegweisende Fläche (28) als schiefe Ebene zu der Seitenfläche (25) des Stellrades ausgebildet ist,
- die schiefe Ebene (28) sich um die Drehachse herum erstreckt,
- der Prüfschirm (7) auf der schiefen Ebene (28) aufliegt,
- ein zwischen dem Optikkasten (4) und dem Prüfschirm (7) eingesetztes federndes Element (31) den Prüfschirm (7) gegen die schiefe Ebene (28) drückt.

2. Prüfgerät nach Anspruch 1, dadurch gekennzeichnet, daß der Querschnitt der Führungsstange (13) zumindest in dem als Führung für den Prüfschirm (7) dienenden Abschnitt ein Vieleck ist.

3. Prüfgerät nach Anspruch 2, dadurch gekennzeichnet, daß der Querschnitt quadratisch ist.

4. Prüfgerät nach einem der Ansprüche 1 bis 3, dadurch gekennzeichnet, daß der als Führung für den Prüfschirm (7) dienende Abschnitt der Führungsstange (13) durch mindestens eine entsprechend geformte öffnung eines starr mit dem Prüfschirm verbundenen Führungselementes (14) hindurchgeht.

5. Prüfgerät nach Anspruch 4, dadurch gekennzeichnet, daß mit dem Prüfschirm zwei einen Abstand zueinander aufweisende Führungselemente (14) verbunden sind.

6. Prüfgerät nach Anspruch 4 oder 5, dadurch gekennzeichnet, daß das Führungselement (14) an der Rückseite des Prüfschirmes (7) befestigt ist.

7. Prüfgerät nach einem der Ansprüche 1 bis 6, dadurch gekennzeichnet, daß der Prüfschirm (7) bzw. ein an ihn befestigtes Führungselement (14) mit einem zur schiefen Ebene (28) hin gerichteten Vorsprung (30) auf einem kleinen Flächenabschnitt der schiefen Ebene (28) aufliegt.

8. Prüfgerät nach einem der Ansprüche 1 bis 7, dadurch gekennzeichnet, daß der Ansatz (26) angrenzend an die höchste Stelle der schiefen Ebene (28) eine als Anschlag für den Prüfschirm (7) dienende Erhebung (29) aufweist.

9. Prüfgerät nach Anspruch 8, dadurch gekennzeichnet, daß der Ansatz (26) von der Erhebung (29) ausgehend eine zur Seitenfläche (25) des Stellrades hin sich erstreckende Seitenfläche (36) aufweist, welche parallel zur Drehachse verläuft.

10. Prüfgerät nach einem der Ansprüche 1 bis 9, dadurch gekennzeichnet, daß die schiefe Ebene (28) sich in ihrer Längsausdehnung über einen Winkel (β) <360° erstreckt und in die Seitenfläche (25) des Stellrades (8) übergeht.

11. Prüfgerät nach einem der Ansprüche 1 bis 10, dadurch gekennzeichnet, daß der zwischen der schiefen Ebene (28) und der Seitenfläche (25) des Stellrades (8) bestehende Winkel (α) <45° ist.

12. Prüfgerät nach einem der vor Ansprüche 1 bis 11, dadurch gekennzeichnet, daß der die schiefe Ebene (28) aufweisende Ansatz (26) von einem Wandungsabschnitt eines hohl ausgeführten und koaxial zur Drehachse verlaufenden Zylinders gebildet ist.

13. Prüfgerät nach einem der Ansprüche 1 bis 12, dadurch gekennzeichnet, daß das Stellrad (8) durch eine zwischen ihm und dem Optikkasten (4) wirkende Rast- oder Bremsvorrichtung festgestellt ist.

14. Prüfgerät nach einem der vorstehenden Ansprüche 1 bis 13, dadurch gekennzeichnet, daß die Drehachse des Stellrades (8) und die Längsachse der Führungsstange (13) fluchten.

15. Prüfgerät nach Anspruch 14, dadurch gekennzeichnet, daß an dem nach unten weisenden Endabschnitt der Führungsstange (13) ein im Querschnitt kreisrunder Lagerzapfen (21) angeformt ist, auf welchem das Stellrad (8) mit einer entsprechend großen zentralen öffnung aufgesteckt ist.

16. Prüfgerät nach Anspruch 15, dadurch gekennzeichnet, daß die öffnung des Stellrades (8) von einer Hülse (23) gebildet ist, welche etwa so lang wie der Lagerzapfen (21) ausgeführt ist.

17. Prüfgerät nach Anspruch 16, dadurch gekennzeichnet, daß auf den Lagerzapfen (21) oder die Hülse (23) des Stellrades (8) eine Druckfeder (24) aufgesetzt ist, welche sich mit einem Ende an einer Schulter der Führungsstange (13) abstützt und mit dem anderen Ende unter Vorspannung an der Seitenfläche (25) des Stellrades (8) anliegt und die dieser Seitenfläche gegenüberliegende und als Reibfläche dienende Seitenfläche des Stellrades (8) gegen eine Reibfläche des Optikkastens (4) drückt.

18. Prüfgerät nach einem der vorstehenden Ansprüche, dadurch gekennzeichnet, daß der die schiefe Ebene (28) aufweisende zylinderförmige Wandungsabschnitt (26) sich bis auf die untere Seite des Stellrades (8) hin erstreckt und einen Boden (32) aufweist, dessen Außenseite die Reibfläche des Stellrades (8) ist.

19. Prüfgerät nach Anspruch 17, dadurch gekennzeichnet, daß die Druckfeder (24) sich an einer ringförmigen Scheibe (22) abstützt, welche auf den Lagerzapfen (21) aufgesetzt ist und an der an den Lagerzapfen angrenzenden Schulter der Führungsstange (13) anliegt.

20. Prüfgerät nach einem der vorstehenden Ansprüche, dadurch gekennzeichnet, daß der nach oben weisende Endabschnitt der Führungsstange (13) von einer Druckfeder (31) umgeben ist, welche mit ihrem nach unten weisenden Ende gegen ein Führungselement (14) und mit ihrem nach oben weisenden Ende gegen eine Wandung (16) des Optikkastens (4) drückt.

21. Prüfgerät nach einem der vorstehenden Ansprüche, dadurch gekennzeichnet, daß der Lagerzapfen (21) an seiner Stirnfläche ein Befestigungselement aufweist, mit welchem er an einer Wandung (17) des Optikkastens (4) befestigt ist.

22. Prüfgerät nach Anspruch 20, dadurch gekennzeichnet, daß die Wandung (16) des Optikkastens (4) eine öffnung aufweist, durch welche der nach oben weisende Endabschnitt der Führungssäule (13) hindurchgeht und welche dem Querschnitt des Endabschnitts entsprechende Abmessungen aufweist.

23. Prüfgerät nach einem der Ansprüche 20 bis 22, dadurch gekennzeichnet, daß die Wandungen (16 und 17) von freien Schenkeln eines U-förmig ausgeführten Halterungsteils (18) gebildet sind.

24. Prüfgerät nach Anspruch 23, dadurch gekennzeichnet, daß der die Schenkel (16 und 17) verbindende mittlere Steg des Halterungsteils (18) an einer Innenseite des Optikkastens (4) befestigt ist.

25. Prüfgerät nach einem der vorstehenden Ansprüche, dadurch gekennzeichnet, daß das Stellrad (8) mit einem Abschnitt durch eine öffnung (33) im Optikkasten (4) nach außen ragt.

26. Prüfgerät nach Anspruch 25, dadurch gekennzeichnet, daß der aus dem Optikkasten herausragende Abschnitt des Stellrades (8) hinter einer an dem Optikkasten (4) befestigten, durchsichtigen Platte (34) verläuft, in welcher eine Markierung (35) für eine Skala des Stellrades (8) eingebracht ist.

27. Prüfgerät nach Anspruch 26, dadurch gekennzeichnet, daß die Platte (34) die Seitenwandung eines Schlitzes von einem an einer Außenseite des Optikkastens (4) befestigten Kunststoffteils ist.

28. Prüfgerät nach einem der vorstehenden Ansprüche, dadurch gekennzeichnet, daß in einem nicht als Handhabe dienenden Randabschnitt des Stellrades (8) eine Aussparung eingebracht ist.

## Claims

1. A testing apparatus for vehicle headlamps, having the following features:
- the optical housing (4) is fastened to a travelling stand (1),
- a convergent lens (11) is inserted in an aperture in the optical housing (4),
- a testing screen (7) extending perpendicularly to the optical axis of the convergent lens is situated opposite the convergent lens (11) inside the optical housing (4),
- the testing screen (7) is guided so that it is vertically displaceable and its height can be adjusted by means of an adjusting wheel (8) which can be operated from the outside and by means of an apparatus which is coupled to the adjusting wheel (8) and which converts the rotational movement of the adjusting wheel (8) into a translational movement of the testing screen (7),
characterised in that
- the testing screen (7) is secured, to prevent it from twisting, to a vertically extending guide rod (13) which is installed fixed in the optical housing (4), and is height-adjustable,
- the axis of rotation of the adjusting wheel (8) and the longitudinal axis of the guide rod (13) are parallel to each other,
- a carrier (26) is rigidly attached to the face (25) of the adjusting wheel (8) facing the testing screen (7), the face (28) of the carrier pointing away from the face (25) of the adjusting wheel (8) being constructed as a plane which is inclined in relation to the face (25) of the adjusting wheel,
- the inclined plane (28) extends around the axis of rotation,
- the testing screen (7) rests on the inclined plane (28),
- a resilient element (31) inserted between the optical housing (4) and the testing screen (7) presses the testing screen (7) against the inclined plane (28).

2. A testing apparatus according to claim 1, characterised in that the cross-section of the guide rod (13), at least in the section serving as a guide for the testing screen (7), is a polygon.

3. A testing apparatus according to claim 2, characterised in that the cross-section is square.

4. A testing apparatus according to any one of claims 1 to 3, characterised in that the section of the guide rod (13) serving as a guide for the testing screen (7) passes through at least one correspondingly shaped opening in a guide element (14) rigidly attached to the testing screen.

5. A testing apparatus according to claim 4, characterised in that two guide elements (14) at a distance from each other are attached to the testing screen.

6. A testing apparatus according to claim 4 or 5, characterised in that the guide element (14) is attached to the back of the testing screen (7).

7. A testing apparatus according to any one of claims 1 to 6, characterised in that the testing screen (7) or a guide element (14) attached to it rests with a projection (30) directed towards the inclined plane (28) on a small flat section of the inclined plane (28).

8. A testing apparatus according to any one of claims 1 to 7, characterised in that the carrier (26) has a raised section (29) serving as a stop for the testing screen (7) adjacent to the highest point of the inclined plane (28).

9. A testing apparatus according to claim 8, characterised in that the carrier (26) has a lateral face (36), which starts from the raised section (29) and extends towards the face (25) of the adjusting wheel, and which is parallel to the axis of rotation.

10. A testing apparatus according to any one of claims 1 to 9, characterised in that the longitudinal span of the inclined plane (28) extends over an angle (β) < 360° and extends into the face (25) of the adjusting wheel (8).

11. A testing apparatus according to any one of claims 1 to 10, characterised in that the angle (α) which exists between the inclined plane (28) and the face (25) of the adjusting wheel (8) is < 45°.

12. A testing apparatus according to any one of claims 1 to 11, characterised in that the carrier (26) comprising the inclined plane (28) is formed from a wall section of a hollow cylinder which is coaxial with the axis of rotation.

13. A testing apparatus according to any one of claims 1 to 12, characterised in that the adjusting wheel (8) is secured by means of a latching or braking apparatus acting between it and the optical housing (4).

14. A testing apparatus according to any one of the preceding claims 1 to 13, characterised in that the axis of rotation of the adjusting wheel (8) and the longitudinal axis of the guide rod (13) are aligned.

15. A testing apparatus according to claim 14, characterised in that a bearing journal (21) of circular cross-section, on which the adjusting wheel (8) is fitted by means of a central opening of corresponding size, is integrally formed on the downwardly-pointing end section of the guide rod (13).

16. A testing apparatus according to claim 15, characterised in that the opening in the adjusting wheel (8) is formed by a bushing (23) which is approximately as long as the bearing journal (21).

17. A testing apparatus according to claim 16, characterised in that a compression spring (24) is placed on the bearing journal (21) or the bushing (23) of the adjusting wheel (8), one end of which compression spring is supported on a shoulder of the guide rod (13) and the other end of which is seated under an initial stress against the face (25) of the adjusting wheel (8), and the face of the adjusting wheel (8) which is opposite this face and which serves as a friction face presses against a friction face of the optical housing (4).

18. A testing apparatus according to any one of the preceding claims, characterised in that the cylindrical wall section (26) comprising the inclined plane (28) extends as far as the lower face of the adjusting wheel (8) and has a base (32), the outside of which is the friction face of the adjusting wheel (8).

19. A testing apparatus according to claim 17, characterised in that the compression spring (24) is supported on an annular disc (22) which is placed on the bearing journal (21) and is seated against the shoulder of the guide rod (13) adjacent to the bearing journal.

20. A testing apparatus according to any one of the preceding claims, characterised in that the upwardly pointing end section of the guide rod (13) is surrounded by a compression spring (31), the downwardly pointing end of which presses against a guide element (14) and the upwardly pointing end of which presses against a wall (16) of the optical housing (4).

21. A testing apparatus according to any one of the preceding claims, characterised in that the bearing journal (21) has a fastening element on its end face, by means of which it is fastened to a wall (17) of the optical housing (4).

22. A testing apparatus according to claim 20, characterised in that the wall (16) of the optical housing (4) has an opening through which the upwardly pointing end section of the guide pillar (13) passes and which has dimensions corresponding to the cross-section of the end section.

23. A testing apparatus according to any one of claims 20 to 22, characterised in that the walls (16 and 17) are formed from the free limbs of a mounting part (18) of U-shaped construction.

24. A testing apparatus according to claim 23, characterised in that the central web of the mounting part (18) joining the limbs (16 and 17) is fastened to an internal face of the optical housing (4).

25. A testing apparatus according to any one of the preceding claims, characterised in that a section of the adjusting wheel (8) projects outwards through an opening (33) in the optical housing (4)

26. A testing apparatus according to claim 25, characterised in that the section of the adjusting wheel (8) projecting outwards from the optical housing runs behind a transparent plate (34) fastened to the optical housing (4), on which a mark (35) is provided for a scale on the adjusting wheel (8).

27. A testing apparatus according to claim 26, characterised in that the plate (34) is the sidewall of a channel in a plastic part fastened to an external face of the optical housing (4).

28. A testing apparatus according to any one of the preceding claims, characterised in that a recess is provided in an edge section of the adjusting wheel (8) which is not used as a hand hold.

## Revendications

1. Appareil de contrôle de projecteurs de véhicules, ayant les particularités suivantes:
- le récipient contenant le système optique, appelé aussi coffret optique (4), est disposé sur un support (1) mobile,
- une lentille convergente (11) est montée dans une ouverture du coffret optique (4),
- un écran de contrôle (7), orienté perpendiculairement à l'axe optique de la lentille convergente, est disposé en face de la lentille convergente (11) à l'intérieur du coffret optique (4) et
- l'écran de contrôle (7) est guidé pour pouvoir être réglé dans le sens vertical et est réglable en hauteur par une roue de réglage (8) manoeuvrable de l'extérieur et par un dispositif, couplé à la roue de réglage (8), qui transforme le mouvement rotatif de celle-ci en un mouvement de translation de l'écran de contrôle (7),
caractérisé en ce que
- l'écran de contrôle (7) est réglable en hauteur et empêché de tourner sur une tige de guidage (13) montée fixe dans le coffret optique (4) et orientée verticalement,
- l'axe de rotation de la roue de réglage (8) et l'axe longitudinal de la tige de guidage (13) sont parallèles,
- à la face latérale (25) de la roue de réglage (8) tournée vers l'écran de contrôle (7) est relié rigidement un prolongement (26) dont la face (28) éloignée de ladite face latérale (25) de la roue de réglage (8) est réalisée comme un plan incliné par rapport à cette face latérale (25) de la roue de réglage,
- le plan incliné (28) s'étend autour de l'axe de rotation,
- l'écran de contrôle (7) repose sur le plan incliné (28) et
- un élément élastique (31) interposé entre le coffret optique (4) et l'écran de contrôle (7), presse l'écran de contrôle (7) contre le plan incliné (28).

2. Appareil de contrôle selon la revendication 1, caractérisé en ce que la section droite de la tige de guidage (13) est un polygone, tout au moins dans la partie servant de guidage pour l'écran de contrôle (7).

3. Appareil de contrôle selon la revendication 2, caractérisé en ce que la section droite est carrée.

4. Appareil de contrôle selon une des revendications 1 à 3, caractérisé en ce que la partie de la tige de guidage (13) servant de guidage pour l'écran de contrôle (7) traverse au moins une ouverture de conformation complémentaire d'un élément de guidage (14) relié rigidement à l'écran de contrôle.

5. Appareil de contrôle selon la revendication 4, caractérisé en ce que deux éléments de guidage (14), espacés l'un de l'autre, sont reliés à l'écran de contrôle.

6. Appareil de contrôle selon la revendication 4 ou 5, caractérisé en ce que l'élément de guidage (14) est fixé au côté arrière de l'écran de contrôle (7).

7. Appareil de contrôle selon une des revendications 1 à 6, caractérisé en ce que l'écran de contrôle (7), ou un élément de guidage (14) fixé à lui, repose par une saillie (30) dirigée vers le plan inlciné (28) sur une petite aire de surface du plan incliné (28).

8. Appareil de contrôle selon une des revendications 1 à 7, caractérisé en ce que le prolongement (26) présente, près du point le plus haut du plan incliné (28), une surélévation (29) servant de butée pour l'écran de contrôle (7).

9. Appareil de contrôle selon la revendication 8, caractérisé en ce que le prolongement (26) présente, à partir de la surélévation (29), une surface latérale (36) s'étendant vers ladite face latérale (25) de la roue de réglage et parallèle à l'axe de rotation.

10. Appareil de contrôle selon une des revendications 1 à 9, caractérisé en ce que le plan incliné (28) s'étend, dans le sens de sa longueur, sur un angle (β) > 360° et se raccorde à ladite face latérale (25) de la roue de réglage (8).

11. Appareil de contrôle selon une des revendications 1 à 10, caractérisé en ce que l'angle (α) entre le plan incliné (28) et ladite face latérale (25) de la roue de réglage (8) est inférieur à 45°.

12. Appareil de contrôle selon une des revendications 1 à 11, caractérisé en ce que le prolongement (26), présentant le plan incliné (28), est formé par une portion de paroi d'un cylindre creux coaxial à l'axe de rotation.

13. Appareil de contrôle selon une des revendications 1 à 12, caractérisé en ce que la roue de réglage (8) est immobilisée par un dispositif d'arrêt ou de freinage agissant entre cette roue et le coffret optique (4).

14. Appareil de contrôle selon une des revendications 1 à 13 précédentes, caractérisé en ce que l'axe de rotation de la roue de réglage (8) et l'axe longitudinal de la tige de guidage (13) sont alignés.

15. Appareil de contrôle selon la revendication 14, caractérisé en ce qu'un tourillon (21) de section circulaire est formé sur la partie extrême dirigée vers le bas de la tige de guidage (13), tourillon sur lequel la roue de réglage (8) est enfilée par un trou central de grandeur correspondante.

16. Appareil de contrôle selon la revendication 15, caractérisé en ce que le trou de la roue de réglage (8) est formé par une douille (23) ayant la même longueur que le tourillon (21).

17. Appareil de contrôle selon la revendication 16, caractérisé par la disposition autour du tourillon (21) ou de la douille (23) de la roue de réglage (8) d'un ressort de compression (24) qui s'appuie par une extrémité sur un épaulement de la tige de guidage (13), s'applique par l'autre extrémité, sous précontrainte, contre ladite face latérale (25) de la roue de réglage (8) et presse la face latérale opposée de cette roue, servant de face de friction, contre une face de friction du coffret optique (4).

18. Appareil de contrôle selon une des revendications précédentes, caractérisé en ce que la portion de paroi cylindrique (26) présentant le plan incliné (28) s'étend jusque sur le côté inférieur de la roue de réglage (8) et comporte un fond (32) dont le côté extérieur est la face de friction de cette roue (8).

19. Appareil de contrôle selon la revendication 17, caractérisé en ce que le ressort de compression (24) s'appuie sur un disque annulaire (22) enfilé sur le tourillon (21) et appliqué contre l'épaulement de la tige de guidage (13) formé à la transition avec le tourillon.

20. Appareil de contrôle selon une des revendications précédentes, caractérisé en ce que la partie extrême de la tige de guidage (13) dirigée vers le haut, est entourée d'un ressort de compression (31) appuyé par son extrémité dirigée vers le bas contre un élément de guidage (14) et par son extrémité dirigée vers le haut contre une paroi (16) du coffret optique (4).

21. Appareil de contrôle selon une des revendications précédentes, caractérisé en ce que le tourillon (21) présente sur sa face d'extrémité un élément de fixation par lequel il est fixé à une paroi (17) du coffret optique (4).

22. Appareil de contrôle selon la revendication 20, caractérisé en ce que la paroi (16) du coffret optique (4) présente une ouverture à travers de laquelle passe la partie extrême dirigée vers le haut de la tige de guidage (13) et qui présente des dimensions correspondant à la section de cette partie extrême.

23. Appareil de contrôle selon une des revendications 20 à 22, caractérisé en ce que les parois (16 et 17) sont formées par des ailes libres d'une pièce de support (18) de forme en U.

24. Appareil de contrôle selon la revendication 23, caractérisé en ce que la base centrale de la pièce de support (18), reliant les ailes (16 et 17), est fixée sur un côté intérieur du coffret optique (4).

25. Appareil de contrôle selon une des revendications précédentes, caractérisé en ce qu'une partie de la roue de réglage (8) dépasse à l'extérieur à travers une ouverture (33) du coffret optique (4).

26. Appareil de contrôle selon la revendication 25, caractérisé en ce que la partie de la roue de réglage (8) dépassant à l'extérieur du coffret optique, peut tourner derrière une plaque transparente (34) fixée à ce coffret (4) et dans laquelle est formé un repère (35) pour une graduation portée par la roue de réglage (8).

27. Appareil de contrôle selon la revendication 26, caractérisé en ce que la plaque (34) est la paroi latérale d'une fente formée dans une pièce en matière plastique fixée sur le côté extérieur du coffret optique (4).

28. Appareil de contrôle selon une des revendications précédentes, caractérisé en ce qu'un évidement est ménagé dans une portion marginale de la roue de réglage (8) ne servant pas pour manoeuvrer cette roue.
